# FASCICULE DE BREVET EUROPEEN

(11) **EP 2 640 004 B1**
(45) Date de publication et mention de la délivrance du brevet: **14.05.2014**
(21) Numéro de dépôt: 13158731.3
(22) Date de dépôt: 12.03.2013
(51) Int. Cl.: H04L 12/24, H04L 12/70, H04L 12/801

(54) **Procede de gestion des echanges de flux de donnees dans un reseau de telecommunication autonomique**
Verwaltungsverfahren von Datenstromaustauschen in einem autonomen Telekommunikationsnetz
Method for managing data-flow exchanges in a standalone telecommunications network

(30) Priorité: 13.03.2012 FR 1252249
(43) Date de publication de la demande: 18.09.2013
(73) Titulaire: IPANEMA TECHNOLOGIES, 92260 Fontenay aux Roses (FR)
(72) Inventeur: Delattre, Michel, 92100 Boulogne Billancourt (FR); Lecerf, François, 92370 Chaville (FR); Bullot, Thomas, 75020 Paris (FR); Provost, Jacques, 91600 Savigny sur Orge (FR)
(74) Mandataire: Ilgart, Jean-Christophe

(56) Documents cités:
- WO-A-2005/046145
- WO-A1-2008/025666
- WO-A1-2010/089316
- US-A1- 2001 019 554
- LYONNET F: "Le réseau au service des applications", INTERNET CITATION, 30 mai 2006 (2006-05-30), XP002421957, Extrait de l'Internet: URL:http://www.arche.fr/Portals/0/pdf/Meet ingPoint/Presentations_MeetingPoint_300506 .pdf [extrait le 2007-02-22]

## Description

### DOMAINE TECHNIQUE

L'invention se situe dans le domaine des télécommunications et concerne plus spécifiquement un procédé de gestion des échanges de flux de données dans un réseau de télécommunication autonomique comportant une pluralité de domaines de contrôle comportant chacun un module central de gestion de communication destiné à définir des règles générales de transfert des flux de données entre une pluralité de machines sources et une pluralité de machines destinations, et au moins un module de contrôle destiné à imposer lesdites règles de transfert dans chacun desdits domaines.

L'invention concerne également un dispositif destiné à mettre en oeuvre le procédé selon l'invention.

L'invention concerne également un programme d'ordinateur mémorisé sur un support, comportant des instructions pour mettre en oeuvre le procédé selon l'invention lorsqu'il est exécuté par un ordinateur.

### ÉTAT DE LA TECHNIQUE ANTÉRIEURE

Le transfert d'informations dans un réseau nécessite le déploiement d'équipements de commutation ou de routage aiguillant l'information depuis une machine source jusqu'à une machine destination à travers des moyens de transmission et des fonctions contrôle de l'aiguillage et d'adaptation de l'information de manière à occuper le moins de ressources possibles, à maintenir des caractéristiques de transfert de flux malgré la concurrence des flux, et à assurer un service de transfert optimal et sûr.

Pour assurer ces fonctions, des dispositifs supplémentaires de gestion de ressources, d'optimisation et de filtrage sont ajoutés aux dispositifs d'aiguillage pour mettre en place des mécanismes complexes de reconnaissance de flux (Deep Packet Inspection,...), de mesures de performances, d'optimisation de l'efficacité du transfert, et de mise en adéquation des moyens de transferts et des demandes de transfert selon une discipline globale.

Ces dispositifs supplémentaires sont agencés sur les chemins de données et leur efficacité est d'autant plus grande que la surface de réseau couverte est grande et que le périmètre est équipé.

Dans les premières générations de réseaux, ces dispositifs ont une action déterminée par des règles initiales cohérentes calculées lors d'une phase de planification de réseau, et les observations sont collectées pour juger de la pertinence et de l'efficacité du plan. La collecte est faite en un point central situé dans un système central de gestion et chargé de corréler l'ensemble des observations afin de construire une vue globale du système. Des phases d'ajustement permettent de redistribuer de nouvelles règles constituant un nouveau plan afin de faire évoluer le système en fonction des prévisions de besoins et des résultats obtenus lors des plans précédents.

Le système central distribue des règles de fonctionnement par des flux de commande vers les éléments de réseau chargés d'appliquer ces règles. Ces derniers génèrent des événements et donnent accès en lecture à des états qui sont collectés par le système central dans des flux de gestion.

Dans les systèmes de l'art antérieur décrit ci-dessus, les ressources du réseau sont partagées entre les flux d'informations qui traversent le réseau et les flux de commande et de gestion qui participent à la bonne marche du service de transport du réseau.

Par ailleurs, les réseaux de télécommunication actuels sont confrontés, d'une part, à une convergence forte où la spécialisation a laissé place à un service unifié de transport de l'information plus flexible, plus efficace, et moins coûteux, et d'autre part, à la virtualisation du système d'information où la consolidation et la rationalisation des ressources du système d'information introduit une forte mobilité des producteurs et consommateurs d'information. Cette évolution introduit une extrême variabilité des types de transfert que ces réseaux ont à traiter ainsi qu'une extrême variabilité des topologies d'échanges.

Il devient alors indispensable d'adapter le transfert d'informations flux par flux, de coordonner ces adaptations de manière à retrouver un comportement global prédictible par application en arbitrant dynamiquement la concurrence des applications en fonction d'objectifs opérationnels.

Il devient également nécessaire de passer d'un ensemble de dispositifs simples, installés en faible quantité selon des règles d'ingénierie précises et orchestrés depuis un système central à un ensemble de dispositifs potentiellement présents en un grand nombre de points du réseau, pouvant s'auto-organiser et agir avec la granularité « flux » et avec des temps de réponse compatibles avec des asservissements étroits entre moyens de transfert et demandes de transfert des applications.

Cette mutation se heurte aux problèmes suivants:
- augmentation du volume d'informations supplémentaires à échanger pour coordonner un système de contrôle distribué,
- lenteur de la convergence des actions distribuées,
- complexité des dispositifs à distribuer,
- difficulté d'adaptation aux pannes compte tenu de la complexité des dispositifs à distribuer, du changement de topologie, et de la diversité des applications échangeant des flux de données,
- difficulté à rationaliser les dispositifs pour servir un réseau segmenté en réseaux virtuels privés préservant la sécurité logique au sein d'une communauté d'échanges,
- augmentation des opérations d'installation et de maintenance du fait de la multiplication des points de réseau à contrôler.

Diverses améliorations ont été apportées pour limiter l'impact du passage à l'échelle. Un exemple est donné par le document WO/2010/089316 « METHOD FOR MANAGING DATA STREAM EXCHANGES IN A STANDALONE TELECOMMUNICATIONS NETWORK » où une architecture autonomique auto-organisée par l'observation des flux permet de maîtriser les temps de convergence des actions distribuées et les volumes d'information de flux de gestion.

Toutefois, le partage des données de routage nécessaire pour que les modules interceptant les flux échangent, directement et deux à deux, les mesures et les informations de coordination concernant un flux Producteur-Consommateur traversant le réseau introduit les contraintes suivants:
- en raison du passage à l'échelle, chaque module ne devrait connaître que les données de routage des flux qu'il intercepte et notamment estimer avec une bonne probabilité dés le début d'un flux intercepté la présence d'un module distant au plus prés du destinataire du flux.
- le risque de mauvaise configuration des données de routage mettant en défaut les mécanismes coordonnés de gestion de flux le temps que les erreurs de données de routage soit détectées et corrigées,
- le traitement simplex effectué généralement par les routeurs de paquet du réseau ne garantit pas qu'un flux Producteur-Consommateur soit échangé sur les deux sens de transfert. Un module de contrôle qui intercepte un flux peut donc ne disposer que d'un seul sens d'échange de ce flux. Les données de routage doivent donc être orientées et prendre en compte le sens d'écoulement.

En outre, avec les dernières évolutions des réseaux de télécommunications, les serveurs ne sont plus localisés dans quelques périmètres bien identifiés de l'Entreprise ou du groupe d'Usagers, mais sont répartis autour d'un réseau étendu WAN (pour Wide Area Network). De ce fait, les dispositifs de sécurité qui assurent l'authentification des fonctions participant aux échanges de flux d'information, l'intégrité de ces flux et la confidentialité de ces flux ne peuvent plus s'appuyer uniquement sur des principes de protection de périmètre. L'usurpation d'identité qui est l'une des principales menaces de cette dématérialisation, permet de commettre des actions frauduleuses ou d'accéder à des droits de façon indue. L'une des techniques d'usurpations d'identité les plus répandues est l'hameçonnage (phishing) qui consiste à faire croire à un consommateur ou producteur d'informations qu'il s'adresse à un tiers de confiance. Le contrôle des paramètres de transfert des flux d'information nécessite quant à lui que les dispositifs de contrôle agissent en tant que mandataire des usagers afin de modifier les caractéristiques de leur flux traversant le réseau WAN tout en respectant leur sémantique. Il est par conséquent nécessaire que ces dispositifs de contrôle s'organisent en ensemble de mandataires

Un autre but de l'invention est de simplifier les opérations d'installation et de planification, et de ne pas faire obstacle à la virtualisation du réseau et des systèmes d'information où les ressources sont allouées dynamiquement selon les besoins et comprennent, entre autres, les dispositifs supplémentaires pour le transfert optimal et sûr des échanges.

Le document WO 2010/089316 Al (IPANEMA TECHNOLOGIES) décrit un procédé de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité de moyens d'accès distribués sur ledit réseau, lesdits moyens d'accès comportant au moins un module d'observation desdits flux situé entre au moins un producteur d'informations Pᵢ. et au moins un consommateur d'informations Cⱼ, au moins un module de traitement desdits flux destiné à optimiser les paramètres de transfert de flux via le réseau, et au moins un module de décision destiné à définir dynamiquement des règles d'optimisation desdits paramètres de transfert.

Le document LYONNET F :« Le réseau au service des applications » (30 Mai 2006 (2006-05-30)XP002421957, extrait internet URL http://www.arche.fr.Portals/0/pdf/MeetingPoint/Pres entations_MeetingPoint_300506.pdf) décrit un une méthode destinée à optimiser les ressources réseau en fonction des objectifs de performance applicatives des entreprises.

Le document WO 2008/025666 A1 (IPANEMA TECHNOLOGIES) décrit un procédé d'optimisation du transfert d'information dans un réseau de télécommunication dans lequel les transferts d'information sont adaptés automatiquement et en permanence en observant la capacité d'un consommateur de l'information transférée dans le cadre d'une application quelconque mise en oeuvre dans le réseau.

Le document WO 2005/046145 A (Ericsson Telefon AB LM) décrit une passerelle réseau adaptable dynamiquement comportant un moteur de règles destiné à traiter des trames de données en fonction d'un ensemble de règle de commutation, chacune desdites règles identifiant un type de trame auquel la règle s'applique et la manière de traiter la trame.

Le document US 2001/019554 A1 (NOMURA YUJI ET AL) décrit un système d'optimisation des chemins de transfert de données dans un réseau à commutation d'étiquette (label switch network system en anglais) tel qu'un réseau MPLS comportant un noeud disposé à l'entré du réseau à commutation d'étiquette destiné à transférer les paquets en fonction des étiquettes et à sélectionner le chemin de transfert par référence à l'entête des paquets.

### EXPOSÉ DE L'INVENTION

L'invention préconise un procédé gestion des échanges de flux de données dans un réseau de télécommunication autonomique comportant une pluralité de domaines de contrôle comportant chacun un module central de gestion de communication destiné à définir des règles générales de transfert des flux de données entre une pluralité de machines sources et une pluralité de machines destinations, et au moins un module de contrôle destiné à imposer lesdites règles de transfert dans chacun desdits domaines.

Ce procédé comporte une phase d'auto-apprentissage au cours de laquelle les modules de contrôle partagent des informations de routage afin de détourner de manière transparente aux usagers les flux afin de pouvoir:
- mesurer les caractéristiques de transfert de ces flux par analyse des deux sens d'échanges (mesure en un point) ou par coopération avec un autre module de contrôle (mesure en deux points)
- modifier l'ordonnancement des flux entre eux pour favoriser des flux plus critiques, d'échanges (mesure en un point) ou par coopération avec un autre module de contrôle (mesure en deux points)

- modifier l'ordonnancement des flux entre eux pour favoriser des flux plus critiques,
- réduire les informations transportées pour éviter d'occuper les ressources réseau par des transports d'informations redondantes,
- plus globalement, optimiser les échanges pour atteindre des objectifs de qualité d'expérience directement perçue par les usagers.

Ces moyens de détournement peuvent être:
- soit une commutation de ligne intégrée au dispositif où est déployé le module de contrôle, un exemple est un relais qui maintient la connectivité d'une ligne tant que le module de contrôle n'est pas opérationnel et qui, dans l'état opérationnel, place le module de contrôle en coupure sur la ligne,
- soit une commutation de paquet contrôlable à distance par le module de contrôle, un exemple est un routeur de paquet comportant un serveur WCCP (Web Cache Control Protocol évoqué par le RFC 3040 de l'IETF) et un module de contrôle se déclarant auprès de ce routeur client WCCP, un autre exemple est un commutateur distribué Openflow (http://www.openflow.org/) piloté par un contrôleur Openflow se coordonnant avec le module de contrôle.

Dans des environnements virtualisés, le module de contrôle peut être une machine logicielle s'exécutant sur des plateformes matérielles banalisées et communiquant avec les dispositifs de commutation par des échanges en mode paquet IP.

Une fois cette étape réalisée, le procédé consiste à utiliser les flux détournés pour que le module de contrôle puisse se faire connaître des autres modules de contrôles également insérés sur le chemin des flux et à maintenir des tables permettant de positionner les machines source et de destination de ces flux, identifiées par des adresses IP par exemple, par rapport aux deux interfaces du module de contrôle ainsi que les autres modules de contrôle.

A cet effet, le procédé selon l'invention comporte les étapes suivantes:
- intercepter par un premier module de contrôle chaque flux échangé entre une machine source et une machine destination dans un domaine de contrôle particulier ;
- extraire de chaque flux intercepté l'adresse de la machine source et l'adresse de la machine destination ;
- insérer dans chaque flux intercepté des données de routage comportant au moins un identifiant du domaine de contrôle particulier dans ledit réseau et un identifiant du premier module de contrôle dans ce domaine;
- transmettre chaque flux intercepté;
et, lorsqu'un flux transmis avec les données de routage est intercepté par un deuxième module de contrôle, ce dernier extrait dudit flux l'identifiant du domaine de contrôle particulier, l'identifiant du premier module de contrôle dans ce domaine, une adresse de la machine source, une adresse de la machine destination, et les données de routage insérées dans le flux intercepté, partage avec le premier module de contrôle des paramètres dynamiques permettant de contrôler le transfert de chaque flux de l'entrée à la sortie dudit domaine particulier.

Le procédé selon l'invention garantit la minimisation de la connaissance partagée par les modules de contrôles et la justesse de cette connaissance.

Selon l'invention, ledit deuxième module:
- déduit de l'identifiant du premier module de contrôle extrait des données de routage une adresse permettant l'établissement d'une connexion directe avec ce premier module,
- établit une connexion directe avec ce premier module et,
- échange avec le premier module les données de supervision du transfert du flux via cette connexion,
- utilise les données de supervision et les règles générales de transfert de flux préétablies par le module central pour ajuster dynamiquement les paramètres de transfert de chaque flux intercepté.

A titre d'exemple de mise en oeuvre, des annonces peuvent être placées dans le premier paquet des connexions TCP (paquet SYN) dans des champs optionnels quand le module intercepte le sens amont - aval du flux, ou dans le paquet d'acquittement (paquet SYN-ACK) quand le module intercepte le sens aval-amont. Ces annonces peuvent être déclenchées par la non connaissance par le module contrôle de la machine distante destinataire ou par une temporisation de rafraichissement de l'auto-apprentissage Comme ces annonces sont portées par les flux Usagers, la découverte des modules de contrôle respecte les règles de cloisonnement entre Usagers. Ces règles sont exercées par différents mécanismes:
- des mécanismes de filtrage interdisant des couples d'adresses identifiant des machines source et destination,
- des mécanismes de traduction d'adresse cachant les adresses des machines d'un périmètre et interdisant donc des sessions vers ces machines depuis des machines externes à ce périmètre,
- des mécanismes de VPN restreignant une topologie logique à un sous-ensemble de machines connectés,
- des mécanismes de sessions sécurisées comme SSL.

Un premier élément des annonces faites par les modules de contrôle est l'identifiant de domaine de contrôle, un second l'identifiant de ce module dans le domaine de contrôle. Le traitement des annonces aboutit à détourer des ensembles de module de contrôle appartenant tous au même domaine de contrôle.

Selon une autre caractéristique du procédé de l'invention, lorsque le deuxième module de contrôle est déjà inscrit dans ce domaine particulier, il partage directement avec ledit premier module de contrôle les paramètres dynamiques permettant de contrôler le transfert de chacun des flux interceptés.

Et, lorsque le deuxième module de contrôle n'est pas encore inscrit dans ce domaine particulier, il transmet au module central de gestion de ce domaine des données d'identification pour son inscription dans ce domaine et récupère les paramètres définissant les règles de transfert de flux dans ce domaine.

En outre, lorsque le deuxième module de contrôle n'appartient pas au domaine de contrôle particulier, il déduit l'adresse du module central de ce domaine à partir des données de routage insérées par le premier module de contrôle dans le flux intercepté, se connecte audit module central, récupère des paramètres de localisation dans le réseau, transmet audit module central les données d'identification pour son inscription dans ce domaine, et récupère les paramètres définissant les règles de transfert de flux dans ce domaine.

Dans tous les cas, à la réception des données d'identification transmises par le deuxième module de contrôle, le module central délivre audit deuxième module de contrôle un identifiant unique dans le domaine de contrôle sous une forme protégée.

Le procédé selon l'invention comporte en outre les étapes suivantes:
- mesurer les caractéristiques de transfert des flux interceptés entre la machine source et la machine destination,
- modifier l'ordonnancement desdits flux pour favoriser les flux les plus critiques,
- supprimer les informations redondantes contenues dans lesdits flux pendant la traversée du domaine,
- modifier les informations de protocole client-serveur transportées par lesdits flux,
- mesurer les caractéristiques de transfert des flux Consommateur-Producteur.

Dans une première variante de réalisation du procédé selon l'invention, les règles de transfert entre machines sources et machines destinations sont imposées pour un seul sens de transfert des flux depuis les modules de contrôle en entrée et sortie du domaine.

Dans une deuxième variante de réalisation, lesdites règles de transfert sont imposées pour les deux sens de transfert des flux par des modules de contrôle agencés respectivement en entrée et en sortie du domaine.

Dans les deux variantes, chaque module de contrôle traversé par un flux retransmis avec des données de routage mémorise l'identifiant du domaine de contrôle particulier, l'identifiant du premier module de contrôle dans ce domaine, l'adresse de la machine source, et l'adresse de la machine destination.

Par ailleurs, chaque premier module de contrôle interceptant un flux insère des données de routage si un flux de sens opposé n'a pas encore été intercepté ou si un flux de sens opposé a été intercepté sans données de routage.

Dans un mode particulier de réalisation de l'invention, les flux de données sont des simplex échangés entre la machine source et la machine destination selon le protocole TCP ou selon le protocole IPv6, et les données de routage sont insérées dans un champ optionnel de l'entête des premiers paquets desdits flux.

Le procédé selon l'invention est mise en oeuvre dans un réseau autonomique dans lequel les domaines de contrôle sont des réseaux virtuels privés, et les modules de contrôle sont des logiciels s'exécutant sur des plates-formes matérielles.

Le procédé selon l'invention est mis en oeuvre par un dispositif de gestion des échanges de flux de données dans un réseau de télécommunication autonomique comportant une pluralité de domaines de contrôle comportant chacun un module central de gestion de communication destiné à définir des règles générales de transfert des flux de données entre une pluralité de machines sources d'informations et une pluralité de machines destinations d'informations, et au moins un module de contrôle destiné à imposer lesdites règles de transfert dans chacun desdits domaines.

Selon l'invention, chaque module de contrôle comporte:
- des moyens pour intercepter chaque flux échangé entre une machine source et une machine destination dans un domaine de contrôle particulier ;
- des moyens pour extraire de chaque flux intercepté l'adresse de la machine source et l'adresse de la machine destination ;
- des moyens pour insérer dans chaque flux intercepté des données de routage comportant au moins un identifiant du domaine de contrôle particulier dans ledit réseau et un identifiant du premier module de contrôle ayant intercepté le flux dans ce domaine;
- des moyens pour retransmettre chaque flux intercepté ;
- des moyens pour extraire de chaque flux retransmis avec données de routage un identifiant du domaine de contrôle particulier, un identifiant du premier module de contrôle ayant intercepté ledit flux dans ce domaine, une adresse de la machine source, une adresse de la machine destination, et les données de routage insérées dans le flux intercepté de manière à établir des connexions directes avec d'autres modules de contrôle dudit domaine particulier pour contrôler les paramètres de transfert de l'entrée à la sortie dudit domaine particulier.

Dans une première variante du dispositif selon l'invention, lorsque les modules de contrôle qui interceptent un flux retransmis par un premier module de contrôle ayant intercepté le premier ce flux dans ce domaine sont déjà inscrits dans ledit domaine particulier, ils sont configurés pour échanger directement avec ce premier module de contrôle les paramètres définissant des règles de transfert de flux dans ce domaine particulier.

Et lorsqu'ils ne sont déjà inscrits dans ledit domaine particulier, ils sont configurés pour transmettre au module central de gestion de ce domaine des données d'identification.

En outre, les différents modules de contrôle n'appartenant pas au domaine de contrôle particulier et interceptant le flux retransmis par un premier module de contrôle ayant le premier intercepté ce flux dans ce domaine sont configurés pour déduire l'adresse du module central de ce domaine à partir des données routage insérés par le premier module de contrôle dans le flux intercepté, se connecter audit module central, récupérer des paramètres de localisation dans le réseau, transmettre audit module central les données d'identification pour une inscription dans ce domaine, et récupérer les paramètres définissant les règles de transfert de flux dans ce domaine.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figure 1, illustre schématiquement une architecture client-serveur dans laquelle est mis en oeuvre un procédé selon l'invention;
- la figure 2 illustre schématiquement l'introduction dynamique d'un module de contrôle selon l'invention sur le chemin emprunté par un flux de données échangé entre deux machines via le réseau de la figure 1.
- la figure 3 illustre schématiquement un exemple de gestion de mémoire cache par un module de contrôle selon l'invention ;
- la figure 4 illustre les échanges entre un client, un serveur, un module de contrôle côté client délimitant le domaine de contrôle, deux modules de contrôle côté serveur interceptant chacun un flux de données,
- la figure 5 illustre les échanges entre un client, un serveur, un module de contrôle côté client délimitant un domaine de contrôle, un module de contrôle côté serveur non déjà paramétré pour ce domaine de contrôle, un serveur d'auto-configuration et un module central chargé de l'orchestration du domaine de contrôle,
- la figure 6 illustre les échanges entre un client, un serveur et plusieurs modules de contrôle selon l'invention sur le chemin des flux d'information échangés entre le client et le serveur à travers le réseau,
- la figure 7 illustre un cas d'échanges où le routage des flux d'information échangés entre le client et le serveur à travers le réseau fait qu'un module de contrôle voit un sens d'échange et un autre module de contrôle voit l'autre sens.

### EXPOSÉ DÉTAILLÉ DE MODES DE RÉALISATION PARTICULIERS

Les définitions suivantes seront utilisées dans la suite de la description:
Un Producteur d'information est un participant du réseau de communication qui délivre de l'information en utilisant les Moyens de transfert.

Un Consommateur d'information est un participant du réseau de communication qui accède à de l'information livrée par un Producteur d'information en utilisant les Moyens de transfert.

Un réseau de transit représente une capacité de transport utilisée lors des transferts d'information entre Producteurs d'information et Consommateurs d'information et est fortement partagé entre une multitude de participants (machines ou individus) d'applications en réseau.

Les moyens d'accès sont des moyens mis en oeuvre pour mettre en relation chaque participant d'applications en réseau avec le réseau de transit.

Un élément fonctionnel est un module logiciel et/ou matériel remplissant un ensemble de fonctions. Il peut être un module de traitement, un module de décision, ou un module d'observation.

Un module de contrôle est un élément fonctionnel pouvant observer (extraire de l'information telle que signature comportementale, métriques, identification) et agir (filtrer, sélectionner une interface de sortie, conditionner le flux au niveau de l'ordonnancement des flux, compresser, modifier les éléments de protocoles pour accélérer, ...) directement sur les flux d'information. Il se coordonne avec d'autres modules de contrôle.

Une Application d'un réseau de communication est définie par un ensemble de participants ayant des rôles de Producteurs et de Consommateurs, par la nature de l'information transférée entre les Producteurs et les Consommateurs et par la nature de l'usage de l'information par les Consommateurs.

Les éléments d'un flux d'information dits paquets comportent un moyen de connaître la destination et l'origine du flux ainsi que de déterminer le début et la fin d'un flux.

La fonction de transfert d'un flux d'information caractérise à chaque instant l'impact des Moyens de transfert sur la livraison d'informations aux Consommateurs.

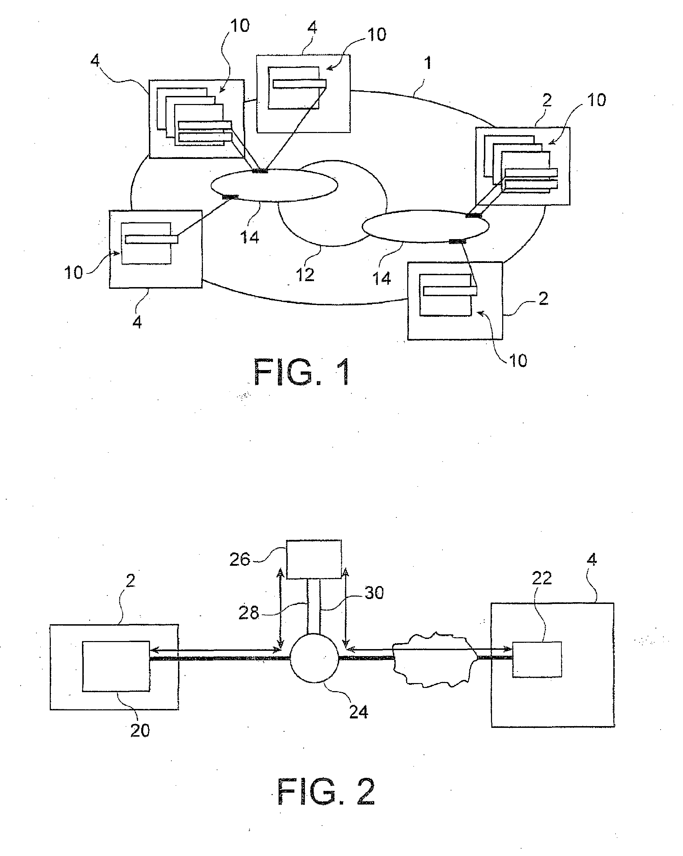

La figure 1 illustre schématiquement un système distribué d'information comportant une pluralité de producteurs d'informations Pi 2, une pluralité de consommateurs d'informations Cj 4, et des moyens de transfert desdites informations entre lesdits producteurs 2 et lesdits consommateurs 4 dans le cadre d'une pluralité d'applications Ak.

Les producteurs d'informations Pi 2, et les consommateurs d'informations Cj 4 échangent les flux de données depuis des machines informatiques 10 reliées à un réseau de transit 12 via des réseaux d'accès 14 ; les flux de données échangés traversant un élément de commutation pour accéder au réseau étendu.

Dans la suite de cette description, les moyens de transfert désignent l'ensemble des mécanismes permettant la livraison d'information selon un protocole d'échange défini entre producteurs 2 et consommateurs 4, le terme communication désignant à la fois le transfert d'information et le protocole d'échange entre entités communicantes ou entre entités communicantes et intermédiaires.

La consommation d'information au sein du réseau de communication représente l'ensemble des informations exploitables par les Consommateurs et délivrées par les producteurs 2 à chaque instant.

Les producteurs 2 et les consommateurs 4 sont considérés au sens d'applications utilisant des ressources logicielles et/ou matérielles en vue de fournir un service au consommateur final.

Les applications peuvent être des applications de communication multimédia telles que la téléphonie, la visiophonie, la vidéoconférence, des applications de distribution multimédia telles que la vidéo à la demande, les diffusions, les syndications de contenu, des applications de consultation telles que les annuaires, les services interactifs WeB, des applications de partage d'information telles que les échanges peer-to-peer, les bases de données réparties, et plus généralement, des applications informatiques dont les éléments s'exécutent sur des machines éloignées et, se synchronisent et échangent de l'information à travers le réseau.

En référence à la figure 2, une machine informatique 20 d'un Producteur d'informations 2 échange des flux de données avec une machine informatique 22 d'un Consommateur d'informations 4. Les flux échangés sont détournés par un élément de commutation 24 vers un module de contrôle 26. Ce dernier comporte une première interface réseau 28 destinée à intercepter les données détournées par l'élément de commutation 24 et une deuxième interface réseau 30 destinée à réémettre les données interceptées vers la deuxième machine 22.

A titre d'exemple, l'élément de commutation 24 peut être un routeur ayant une fonction serveur WCCP (pour Web Cache Control Protocol). Dans ce cas, le module de contrôle 26 peut être client WCCP et télécommander les règles de détournement mises en place sur le routeur 24.

L'élément de commutation peut aussi être un commutateur Ethernet intégré ou non avec le module de contrôle 26. Dans ce cas, lorsque le module de contrôle 26 est opérationnel, les trames Ethernet transportant les paquets de données sont détournées de manière transparente aux équipements amont et aval de l'élément de commutation 24.

Il est à noter que le module de contrôle 26 s'insère ou se retire dynamiquement sur le chemin des flux de données.

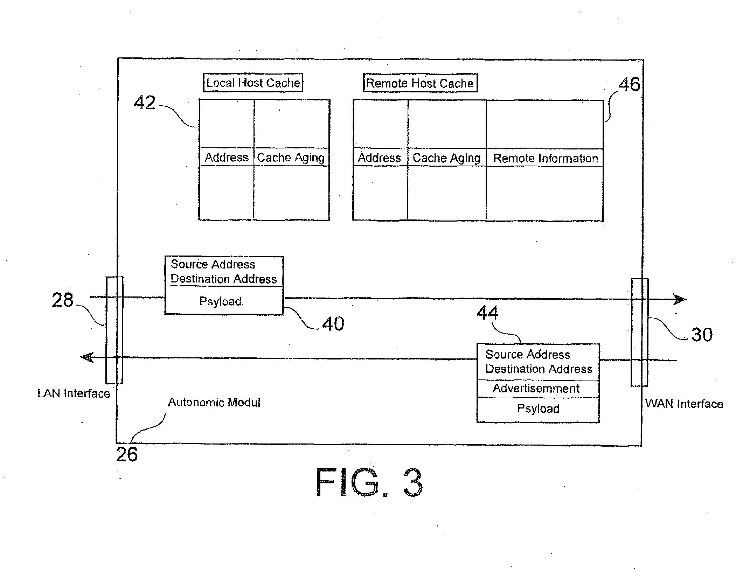

La figure 3 illustre schématiquement les opérations effectuées par le module de contrôle 26 sur un paquet de données 40 intercepté en vue de réaliser un auto-apprentissage des identifiants de machines sur chacune des 2 interfaces 28 et 30 de ce module de contrôle 26.

Rappelons que le paquet de données 40 porte un identifiant de la machine source 20 et un identifiant de la machine destination 22.

Comme illustré par la figure 3, le module de contrôle 26 extrait du paquet de données 40 l'adresse de la machine source 20 et l'adresse de la machine destination 22, stocke ces adresses dans une mémoire cache locale 42, insère des données de routage dans le paquet 40, puis retransmet le paquet intercepté vers la deuxième interface 30. Lorsque le paquet 40 retransmis avec les données de routage est intercepté par un deuxième module de contrôle, ce dernier en extrait l'identifiant du domaine de contrôle 20, l'identifiant du premier module de contrôle 26, l'adresse de la machine source, l'adresse de la machine destination, et les données de routage insérées dans le paquet par le premier module de contrôle 26.

A titre d'exemple, les paquets échangés sont des paquets IP et les machines 20 et 22 sont réparties en deux groupes, un premier groupe comportant les machines identifiées par leur identifiant en tant que sources des paquets reçus sur la première interface 28 et par leur identifiant en tant que destinataires des paquets reçus sur la deuxième interface 30, et les machines identifiées par leur identifiant en tant que destinataires des paquets reçus sur la première interface 28 et par leur identifiant en tant que sources des paquets reçus sur la deuxième interface 30.

Le module de contrôle 26 peut facilement distinguer ces deux interfaces en interface locale et interface vers le réseau étendu en observant les temps de réponse entre deux paquets d'un même flux mais circulant dans des sens opposés.

Notons qu'un paquet 44 ayant déjà traversé un module de contrôle distant porte des informations annoncées par ce module de contrôle distant dans des champs optionnels d'entête.

Le module de contrôle 26 extrait du paquet de données 44 l'adresse de la machine source de ce paquet et l'adresse de la machine destination de ce paquet, stocke ces adresses dans une mémoire cache locale 46, insère des données de routage dans le paquet 44, puis retransmet le paquet intercepté vers la première interface 28.

A titre d'exemple, les paquets concernés sont les paquets TCP SYN d'ouverture de connexion TCP.

Les informations apprises sont conservées jusqu'à expiration d'un temporisateur réarmé à chaque paquet de flux impliquant une machine d'un des deux groupes de machines.

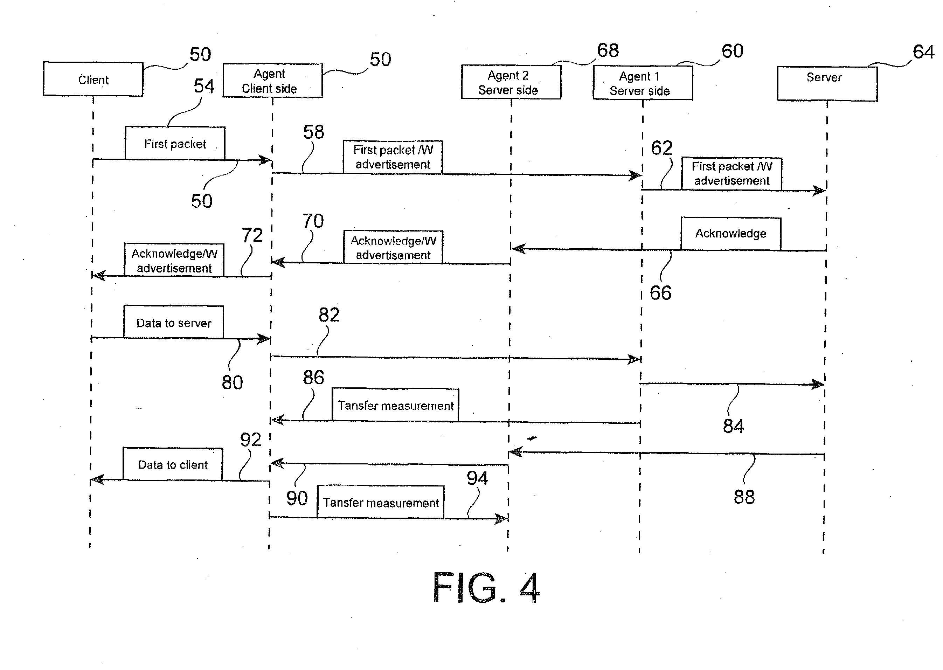

La figure 4 illustre les échanges d'informations additionnelles dans un flux intercepté par un module de contrôle dans le cas général où les flux sont interceptés par des modules de contrôle différents selon le sens de l'échange.

Un client 50 émet à l'étape 52 un flux de donnée 54. Les paquets de ce flux sont interceptés par un premier module de contrôle 56 faisant partie d'un domaine de contrôle du client 50. Le module de contrôle 56 insère dans l'entête d'un premier paquet (paquet SYN TCP) du flux intercepté l'identifiant du domaine de contrôle et son propre identifiant dans ce domaine puis réémet (étape 58) les paquets avec les données ajoutées. Le flux est à nouveau intercepté par un deuxième module de contrôle 60 après avoir traversé le réseau étendu. Le deuxième module de contrôle 60 met alors à jour son cache d'identifiants de machines distantes et associe la machine source du flux intercepté au premier module de contrôle 56 et transfère, à l'étape 62, le flux au serveur 64.

A l'étape 66, le serveur 64 transmet un accusé réception. Le module de contrôle 68 intercepte l'accusé de réception, insère dans l'entête d'un premier paquet (paquet SYN ACK TCP) l'identifiant du domaine de contrôle et son propre identifiant dans ce domaine puis réémet (étape 70) avec les données ajoutées. Le premier module de contrôle 56 intercepte à son tour cet accusé de réception et le réémet vers le client 50 (étape 72).

Par la suite, lorsque le client émet un nouveau paquet (étape 80), ce dernier est intercepté par le premier module de contrôle 56 qui l'émet en appliquant les règles de transfert (étape 82) cohérentes avec celles du deuxième module de contrôle 60. Ce dernier transmet à son tour (étape 84) le paquet au serveur 64 et, parallèlement, envoie directement (étape 86) des informations de mesure ou de coordination au premier module de contrôle 56. Ces informations vont à leur tour permettre au premier module de contrôle 56 d'entretenir son cache d'identifiants de machines distantes.

A l'étape 88, le serveur 64 transmet un nouveau paquet intercepté par le module de contrôle 68 qui, à son tour, transmet (étape 90) le paquet en appliquant les règles de transfert cohérentes avec celles du premier module de contrôle 56. Ce dernier transfère (étape 92) le paquet au client 50.

A l'étape 94, le premier module de contrôle 56 transmet directement des informations de mesure ou de coordination au deuxième module de contrôle 68.

Dans le cas général où un premier flux allant dans un premier sens d'échange est intercepté par un premier module de contrôle 56 puis par un deuxième module de contrôle 60 et un deuxième flux allant dans le sens contraire est intercepté par un troisième module de contrôle 68 différent du deuxième module de contrôle, ce troisième module de contrôle insère à son tour dans l'entête d'un premier paquet de son point de vue (paquet SYN-ACK TCP) l'identifiant de domaine et son propre identifiant dans le domaine. Le premier module de contrôle met alors à jour son cache d'identifiants de machines distantes et associe la machine source du sens aval-amont du flux intercepté au troisième module de contrôle. Par la suite, le premier module de contrôle envoie directement des informations de mesure ou de coordination au troisième module de contrôle et corrèle les actions des deuxième et troisième module de contrôle.

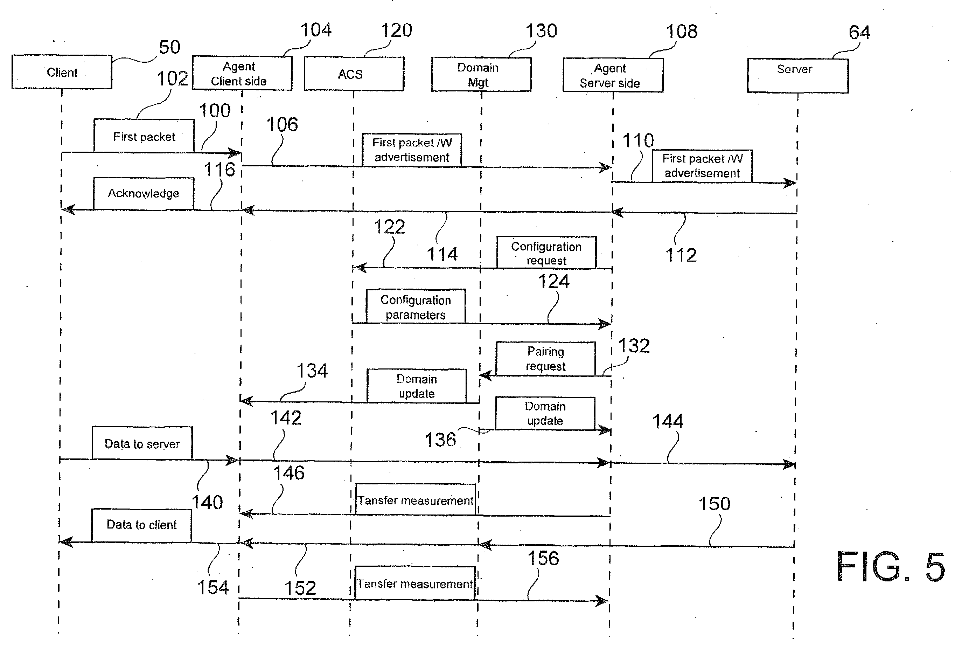

La figure 5 illustre les échanges d'informations additionnelles dans un flux intercepté par un module de contrôle dans le cas général où le module de contrôle s'est inséré dynamiquement dans le chemin des flux, n'a pas encore d'affectation dans un domaine de contrôle et n'est pas connu des autres modules de contrôle

Le client 50 émet à l'étape 100 un flux de donnée 102. Les paquets de ce flux sont interceptés par un premier module de contrôle 104 faisant partie d'un domaine de contrôle du client 50. Le module de contrôle 56 insère dans l'entête d'un premier paquet (paquet SYN TCP) du flux intercepté l'identifiant du domaine de contrôle et son propre identifiant dans ce domaine puis émet (étape 106) les paquets avec les données ajoutées. Le flux est à nouveau intercepté par un deuxième module de contrôle 108 après avoir traversé le réseau étendu. Le deuxième module de contrôle 108 prend connaissance de l'identifiant du domaine et transfère, à l'étape 110, le flux au serveur 64.

A l'étape 112, le serveur 64 transmet un accusé réception intercepté par le deuxième module de contrôle 108 qui, à son tour, transmet (étape 114) l'accusé réception en sachant qu'il sera intercepté par le premier module de contrôle 104. Ce dernier transfère (étape 116) cet accusé réception au client 50.

Dans le cas général où le deuxième module de contrôle 108 n'a pas encore d'affectation dans un domaine de contrôle, il déduit de l'identifiant de domaine l'adresse d'un serveur d'auto-configuration 120. A titre d'exemple, ce serveur d'auto-configuration peut présenter une interface conforme au TR-069.

L'auto-configuration peut aussi être faite indépendamment de l'interception des flux en se basant sur un identifiant de machine physique ou virtuelle dans les cas où il n'y a pas d'avantages à piloter l'auto-configuration par l'auto-apprentissage des modules de contrôle.

A l'étape 122, le deuxième module de contrôle 108 interroge le serveur d'auto-configuration 120 et, en retour de paramètres appris tel que l'adresse IP dynamique attribué au module de contrôle, il reçoit (étape 124) du serveur d'auto-configuration 120 les éléments de configuration correspondant au domaine de contrôle et à sa localisation dans le réseau. Parmi ces éléments de configuration, le deuxième module de contrôle 108 reçoit l'adresse du module central 130 en charge de l'orchestration du domaine de contrôle.

A l'étape 132, le deuxième module de contrôle 108 se fait connaître du module central 130 en transmettant des caractéristiques permanentes mais non représentatives de la localisation dans le réseau, des caractéristiques permanentes représentatives de la localisation dans le réseau, et, des caractéristiques dynamiques que les autres modules de contrôle et le module central 130 ont besoin de connaître.

Le deuxième module de contrôle 108 s'engage à contrôler régulièrement les caractéristiques permanentes représentatives de la localisation dans le réseau et, en retour, le module central 130 lui délivre un identifiant unique dans le domaine de contrôle qui sera, par la suite, inséré dans les flux interceptés. La validité de cet identifiant est lié au contrôle fait sur les caractéristiques permanentes représentatives de la localisation dans le réseau.

Une procédure de scellement de l'identifiant peut consister à générer une paire de clés publique-privé sur le module de contrôle nouvellement introduit, à communiquer la clé publique au module central 130 et à signer ou faire signer depuis le module central 130 un certificat X.509 englobant l'identifiant et la clé publique du module de contrôle. Cet identifiant servira aux autres modules de contrôle pour retrouver l'ensemble des caractéristiques du deuxième module de contrôle 108 et, en particulier, ses paramètres d'accès.

A titre d'exemple, ses paramètres d'accès peuvent être une adresse IP, un certificat X.509 et une méthode d'accès.

Le module central 130 transmet ensuite au premier module de contrôle 104 et au deuxième module de contrôle 108 respectivement à l'étape 134 et à l'étape 136, une mise à jour des informations sur le domaine de contrôle.

Par la suite, lorsque le client 50 émet un nouveau paquet (étape 140), ce dernier est intercepté par le premier module de contrôle 104 qui le transfère (étape 142) au deuxième module de contrôle 108. Ce dernier transmet (étape 144) le paquet au serveur 64 et, parallèlement, envoie directement (étape 146) des informations de mesure ou de coordination au premier module de contrôle 104. Ces informations vont à leur tour permettre au premier module de contrôle 104 d'entretenir son cache d'identifiants de machines distantes.

A l'étape 150, le serveur 64 transmet un accusé réception au module de contrôle 108 qui, à son tour, transmet (étape 152) l'accusé réception avec les données ajoutées au premier module de contrôle 56. Ce dernier transfère (étape 154) cet accusé réception au client 50.

A l'étape 156, le premier module de contrôle 104 transmet directement des informations de mesure ou de coordination au deuxième module de contrôle 108.

Notons que les modules de contrôle peuvent être placés dans des périmètres administratifs de réseaux distincts, par exemple un périmètre Entreprise géré par un administrateur de l'Entreprise et un périmètre Cloud géré par un opérateur de télécommunications. La communication entre les modules de contrôle peut alors passer par une traduction d'adresse masquant les adresses privées de l'Entreprise et ne permettant que des communications initialisées par les modules de contrôle du périmètre Entreprise vers les modules de contrôle du périmètre Cloud. La méthode d'accès permet donc aux modules de contrôle ayant à échanger de l'information de contrôle de sélectionner les procédures de mise en communication appropriées.

Au cours des échanges d'informations d'un flux intercepté, le module de contrôle en aval peut initialiser un échange d'informations de contrôle avec le module de contrôle en amont. Ces informations de contrôle sont par exemple les éléments de mesure observés par le module de contrôle aval et qui permettront au module de contrôle aval de calculer délai, taux de perte et gigue observés sur le flux sur le segment de réseau encadré par les deux modules de contrôle.

Ces informations de contrôle entretiennent aussi les tables d'auto-apprentissage illustrées à la figure 3. Ainsi, même si le flux intercepté par un module de contrôle n'est que partiel, l'interception ne pouvant se faire que sur un seul sens d'échange, les informations de contrôle, que le module de contrôle aval fournit directement au module de contrôle amont identifié par les annonces insérées dans le flux amont-aval, participent à associer aux adresses de machines distantes les identifiants de module de contrôle qui sont au plus prés de ces machines.

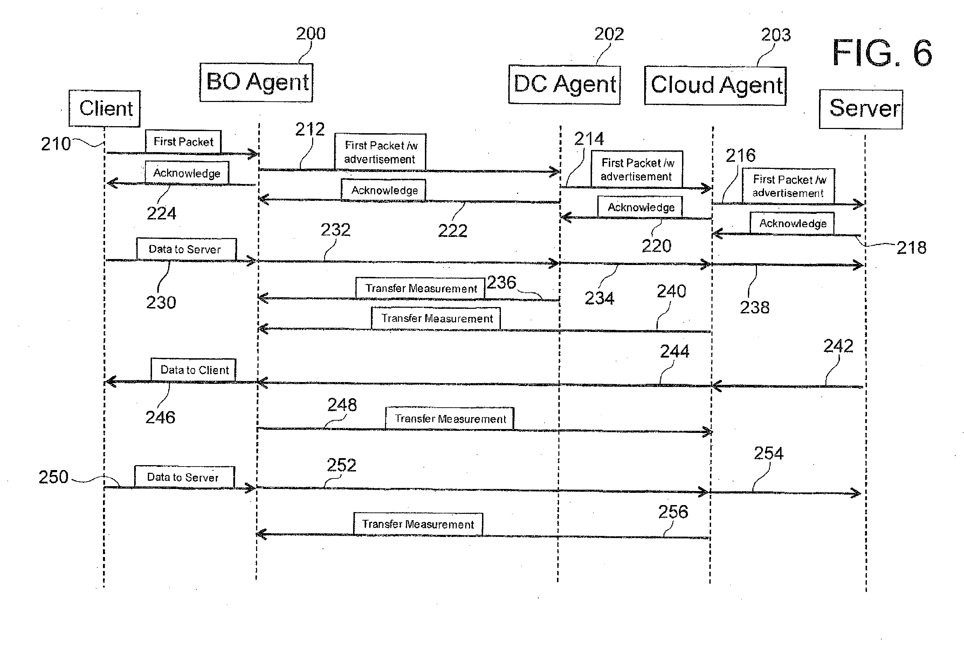

La figure 6 présente les échanges lorsque le flux est intercepté par plus que deux modules de contrôle.

Un module de contrôle amont 200 insère les identifiants de domaine de contrôle et de module dans ce domaine dans l'un des premiers paquets du flux. Ces informations sont lues par un premier module de contrôle aval 202 et un deuxième module aval 203. Ces deux modules de contrôle avals 202 et 203 sont alors en mesure d'envoyer directement au module de contrôle amont 200 des informations de contrôle grâce à l'identifiant de module de contrôle annoncé qu'ils peuvent convertir en paramètres d'accès.

A titre d'exemple, le premier module de contrôle aval est hébergé par un Point de Présence d'un opérateur de télécommunications ou d'un fournisseur de services Internet. Le second module de contrôle aval est hébergé par un Point de Présence au plus près de la machine destinataire 64 sélectionnée par les procédures de Cloud Computing.

A partir des informations de contrôle reçues, le module de contrôle amont 200 peut déterminer le module aval le plus prés de la machine distante. A titre d'exemple, il est possible d'incrémenter un compteur dans l'annonce faite depuis le module amont 202 dans les données de routage et insérée dans l'un des premiers paquets du flux intercepté chaque fois qu'un module aval intercepte le flux. La valeur du compteur est lue par les modules avals et est par la suite reportée dans les informations de contrôle aval-amont.

Ainsi à l'étape 210, le client 50 émet à un flux de donnée dont les paquets sont interceptés par un le module de contrôle amont 200 faisant partie d'un domaine de contrôle du client 50. Le module de contrôle amont 200 insère dans l'entête d'un premier paquet (paquet SYN TCP) du flux intercepté l'identifiant du domaine de contrôle et son propre identifiant dans ce domaine puis émet (étape 212) les paquets avec les données ajoutées. Le flux est à nouveau intercepté par le premier module de contrôle aval 202 après avoir traversé un premier segment du réseau étendu. Le premier module de contrôle aval 202 prend connaissance de l'identifiant du domaine, peut établir une connexion directe avec le module de contrôle 200 et émet le flux à l'étape 214 en mettant à jour les données de routage ajoutées au premier module de contrôle amont 200. Ce flux est intercepté à nouveau par le deuxième module de contrôle aval 203 après avoir traversé un second segment du réseau étendu. Ce dernier module le transmet au serveur 64 (étape 216) après avoir extrait les données de routage lui permettant d'établir une connexion directe avec le premier module de contrôle amont 200 et de détecter l'interception par le premier module de contrôle aval 202.

A l'étape 218, le serveur 64 transmet un accusé réception intercepté par le deuxième module de contrôle aval 203 qui, à son tour, transmet (étape 220) l'accusé réception en sachant qu'il sera intercepté par le premier module de contrôle aval 202, puis par le premier module de contrôle amont 200. Le premier module de contrôle 202 intercepte, extrait les données de routage, met à jour ces données de routage et retransmet (étape 222). Le premier module de contrôle amont 200 intercepte, extrait les données de routage et transfère (étape 224) cet accusé réception au client 50.

Par la suite, lorsque le client 50 émet un nouveau paquet (étape 230), ce dernier est intercepté par le premier module de contrôle 200 qui l'émet en appliquant les règles de transfert (étape 232) cohérentes avec celles des modules de contrôle amont 202 et 203. Le premier module aval 202 intercepte et transmet à son tour (étape 234) le paquet et, parallèlement, envoie directement (étape 236) des informations de mesure ou de coordination au premier module de contrôle 200. Le paquet est de nouveau intercepté par le deuxième module de contrôle aval 203 qui, à son tour, transmet (étape 238) le paquet au serveur 64 et, parallèlement, envoie directement (étape 240) des informations de mesure ou de coordination au premier module de contrôle 200.

Ces informations vont permettre au premier module de contrôle 200 d'appliquer les règles de transfert adaptées à la traversée complète du réseau étendu et de sélectionner le deuxième module de contrôle aval 203 pour être en charge de la supervision des échanges avec le serveur distant 64.

A l'étape 242, le serveur 64 transmet un nouveau paquet intercepté par le module de contrôle 203 qui, à son tour, transmet (étape 244) le paquet en appliquant les règles de transfert cohérentes avec celles du premier module de contrôle 200. Ce dernier transfère (étape 246) le paquet au client 50 et envoie directement (étape 248) des informations de mesure ou de coordination au deuxième module de contrôle 203.

A l'étape 250, le client 50 transmet un nouveau paquet intercepté par le module de contrôle 200 qui, à son tour, transmet (étape 252) le paquet en appliquant les règles de transfert cohérentes avec celles du deuxième module de contrôle aval 203. Ce dernier transfère (étape 254) le paquet au serveur 64 et envoie directement (étape 256) des informations de mesure ou de coordination au premier module de contrôle 200.

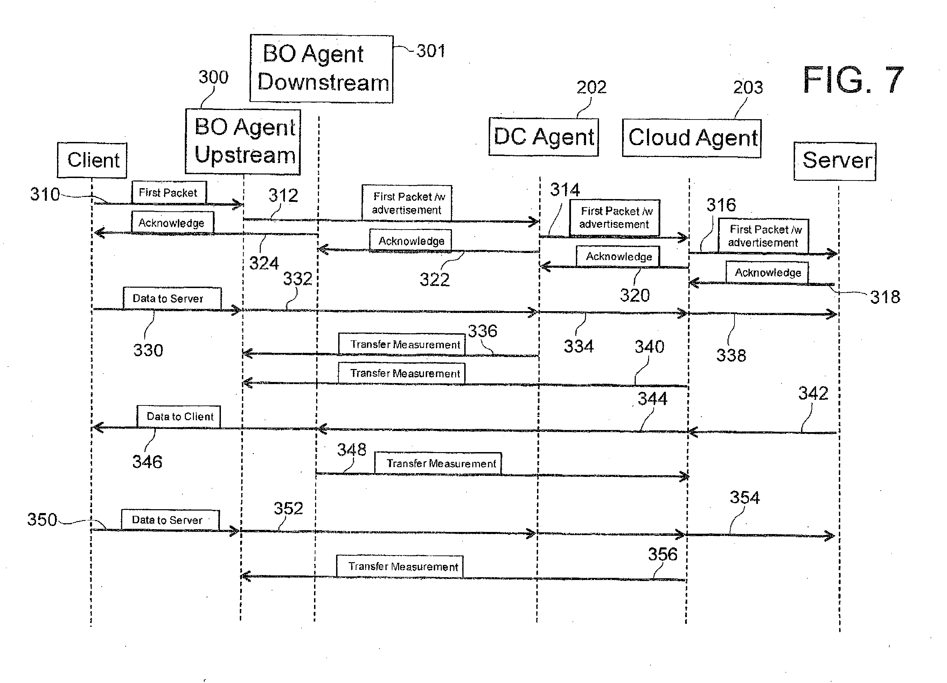

La figure 7 présente les échanges lorsque le flux est intercepté par un module de contrôle amont pour un sens d'échange et par un autre module de contrôle pour l'autre sens.

Cette capacité de fonctionnement en cluster de plusieurs module de contrôle fait partie des paramètres qui peuvent être retrouvés à partir de l'identifiant de n'importe quel module de contrôle en cluster.

Un module de contrôle amont 300 insère les identifiants de domaine de contrôle et de module dans ce domaine dans l'un des premiers paquets du flux. Ces informations sont lues par un premier module de contrôle aval 202 et un deuxième module aval 203. Ces deux modules de contrôle avals 202 et 203 sont alors en mesure d'envoyer directement au module de contrôle amont 300 des informations de contrôle grâce à l'identifiant de module de contrôle annoncé qu'ils peuvent convertir en paramètres d'accès.

A partir des informations de contrôle reçues, le module de contrôle amont 300 peut déterminer le module aval le plus prés de la machine distante et se coordonne avec le second module de contrôle amont 301 fonctionnant avec lui en cluster.

Ainsi à l'étape 310, le client 50 émet à un flux de donnée dont les paquets sont interceptés par un le module de contrôle amont 300 faisant partie d'un domaine de contrôle du client 50. Le module de contrôle amont 300 insère dans l'entête d'un premier paquet (paquet SYN TCP) du flux intercepté l'identifiant du domaine de contrôle et son propre identifiant dans ce domaine puis émet (étape 312) les paquets avec les données ajoutées. Le flux est à nouveau intercepté par le premier module de contrôle aval 202 après avoir traversé un premier segment du réseau étendu. Le premier module de contrôle aval 202 prend connaissance de l'identifiant du domaine et émet le flux à l'étape 314 en mettant à jour les données de routage ajoutées au premier module de contrôle amont 300. Ce flux est intercepté à nouveau par le deuxième module de contrôle aval 203 après avoir traversé un second segment du réseau étendu et qui le transmet au serveur 64 (étape 316) après avoir extrait les données de routage lui permettant d'établir une connexion directe avec le premier module de contrôle amont 300 et de détecter l'interception par le premier module de contrôle aval 202.

A l'étape 318, le serveur 64 transmet un accusé réception intercepté par le deuxième module de contrôle aval 203 qui, à son tour, transmet (étape 320) l'accusé réception en sachant qu'il sera intercepté par le premier module de contrôle aval 202, puis par un premier module de contrôle amont supposé 300. Le premier module de contrôle 202 intercepte, extrait les données de routage, met à jour ces données de routage et retransmet (étape 322). Le deuxième module de contrôle amont 301 intercepte, extrait les données de routage et transfère (étape 324) cet accusé réception au client 50. Ce deuxième module de contrôle 301 est alors en mesure de se coordonner avec le module de contrôle 300 pour échanger localement entre eux leur connaissance des machines et des autres modules de contrôle.

Par la suite, lorsque le client 50 émet un nouveau paquet (étape 330), ce dernier est intercepté par le premier module de contrôle 300 qui le réémet en appliquant les règles de transfert (étape 332) cohérentes avec celles des modules de contrôle amont 202 et 203. Le premier module aval 202 intercepte et transmet à son tour (étape 334) le paquet et, parallèlement, envoie directement (étape 336) des informations de mesure ou de coordination au premier module de contrôle 200. Le paquet est de nouveau intercepté par le deuxième module de contrôle aval 203 qui, à son tour, transmet (étape 338) le paquet au serveur 64 et, parallèlement, envoie directement (étape 340) des informations de mesure ou de coordination au premier module de contrôle 300.

Ces informations vont permettre au premier module de contrôle 300 d'appliquer les règles de transfert adaptées à la traversée complète du réseau étendu, de sélectionner le deuxième module de contrôle aval 203 pour être en charge de la supervision des échanges avec le serveur distant 64 et de se coordonner avec le deuxième module de contrôle aval 301.

A l'étape 342, le serveur 64 transmet un nouveau paquet intercepté par le module de contrôle 203 qui, à son tour, transmet (étape 344) le paquet en appliquant les règles de transfert cohérentes avec celles des modules de contrôle aval 300 et 301. Ce dernier transfère (étape 346) le paquet au client 50 et envoie directement (étape 348) des informations de mesure ou de coordination au deuxième module de contrôle 203.

A l'étape 350, le client 50 transmet un nouveau paquet intercepté par le module de contrôle 300 qui, à son tour, transmet (étape 352) le paquet en appliquant les règles de transfert cohérentes avec celles du deuxième module de contrôle aval 203. Ce dernier transfère (étape 354) le paquet au serveur 64 et envoie directement (étape 356) des informations de de mesure ou de coordination au premier module de contrôle 200.

## Revendications

1. Procédé de gestion des échanges de flux de données dans un réseau de télécommunication autonomique (1) comportant une pluralité de domaines de contrôle (2,4) comportant chacun un module central (170) de gestion de communication destiné à définir des règles générales de transfert des flux de données entre une pluralité de machines sources (20) et une pluralité de machines destinations (22), et au moins un module de contrôle (26, 56, 60, 68, 104, 108, 200, 202, 203, 300, 301) destiné à imposer lesdites règles de transfert dans chacun desdits domaines, procédé **caractérisé en ce qu'il** comporte les étapes suivantes:
- intercepter par un premier module de contrôle (26, 56, 104, 200, 300) chaque flux échangé entre une machine source (20) et une machine destination (22) dans un domaine de contrôle (2, 4) particulier ;
- extraire de chaque flux intercepté l'adresse de la machine source (20) et l'adresse de la machine destination (22);
- insérer dans chaque flux intercepté des données de routage comportant au moins un identifiant du domaine de contrôle (2, 4) particulier dans ledit réseau et un identifiant du premier module de contrôle (26, 56, 60, 68, 104, 108, 200, 202, 203, 300, 301) dans ce domaine;
- transmettre chaque flux intercepté;
et, lorsqu'un flux retransmis avec les données de routage est intercepté par un deuxième module de contrôle (26, 60, 108, 202, 203), ce dernier extrait dudit flux l'identifiant du domaine de contrôle (2, 4) particulier, l'identifiant du premier module de contrôle (26, 56, 60, 68, 104, 108, 200, 202, 203, 300, 301) dans ce domaine, une adresse de la machine source (20), une adresse de la machine destination (22), et les données de routage insérées dans le flux intercepté,
- déduit de l'identifiant du premier module de contrôle (26, 56, 68, 104, 200) extrait des données de routage une adresse permettant l'établissement d'une connexion directe avec ce premier module de contrôle (26, 56, 60, 68, 104, 108, 200, 202, 203, 300, 301),
- établit une connexion directe avec ce premier module et de contrôle,
- partage avec le premier module de contrôle (26, 56, 60, 68, 104, 108, 200, 202, 203, 300, 301) des paramètres dynamiques permettant de contrôler le transfert de chaque flux de l'entrée à la sortie dudit domaine particulier
- échange avec ce premier module de contrôle (26, 56, 60, 68, 104, 108, 200, 202, 203, 300, 301) les données de supervision du transfert du flux via cette connexion,
- utilise les données de supervision et les règles générales de transfert de flux préétablies par le module central (130) pour ajuster dynamiquement les paramètres de transfert de chaque flux intercepté.

2. Procédé selon la revendication 1 dans lequel, lorsque le deuxième module de contrôle (26, 56, 60, 68, 104, 108, 200, 202, 203, 300, 301) est déjà inscrit dans ce domaine particulier, il partage directement avec ledit premier module de contrôle (26, 56, 60, 68, 104, 108, 200, 202, 203, 300, 301) les paramètres dynamiques permettant de contrôler le transfert de chacun des flux interceptés.

3. Procédé selon la revendication 1 dans lequel, lorsque le deuxième module de contrôle (26, 56, 60, 68, 104, 108, 200, 202, 203, 300, 301) n'est pas encore inscrit dans ce domaine particulier, il transmet au module central (130) de gestion de ce domaine des données d'identification pour son inscription dans ce domaine et récupère les paramètres définissant les règles de transfert de flux dans ce domaine.

4. Procédé selon la revendication 1 dans lequel, lorsque le deuxième module de contrôle (26, 56, 60, 68, 104, 108, 200, 202, 203, 300, 301) n'appartient pas au domaine de contrôle (2, 4) particulier, il déduit l'adresse du module central (130) de ce domaine à partir des données de routage insérés par le premier module de contrôle (26, 56, 60, 68, 104, 108, 200, 202, 203, 300, 301) dans le flux intercepté, se connecte audit module central (130), récupère des paramètres de localisation dans le réseau , transmet audit module central (130) les données d'identification pour son inscription dans ce domaine, et récupère les paramètres définissant les règles de transfert de flux dans ce domaine.

5. Procédé selon la revendication 3 ou 4 dans lequel, à la réception desdites données d'identification, le module central (130) délivre audit deuxième module de contrôle (26, 56, 60, 68, 104, 108, 200, 202, 203, 300, 301) un identifiant unique dans le contrôle (2, 4) sous une forme protégée.

6. Procédé selon la revendication 1 comportant en outre les étapes suivantes:
- mesurer les caractéristiques de transfert des flux interceptés entre la machine source et la machine destination,
- modifier l'ordonnancement desdits flux pour favoriser les flux les plus critiques,
- supprimer les informations redondantes contenues dans lesdits flux pendant la traversée du domaine,
- modifier les informations de protocole client-serveur transportées par lesdits flux,
- mesurer les caractéristiques de transfert des flux Consommateur-Producteur.

7. Procédé selon la revendication 6 dans lequel les règles de transfert entre machines sources (20) et machines destinations (22) sont imposées sur un seul sens de transfert des flux depuis les modules de contrôle en entrée et sortie du domaine.

8. Procédé selon la revendication 6 dans lequel les règles de transfert entre machines sources (20) et machines destinations (22) sont imposées sur les deux sens de transfert des flux par des modules de contrôle agencés respectivement en entrée et en sortie du domaine.

9. Procédé selon l'une des revendications 7 ou 8 dans lequel chaque module de contrôle (26, 56, 60, 68, 104, 108, 200, 202, 203, 300, 301) traversé par un flux retransmis avec des données de routage mémorise l'identifiant du domaine de contrôle (2, 4) particulier, l'identifiant du premier module de contrôle (26, 56, 60, 68, 104, 108, 200, 202, 203, 300, 301) dans ce domaine, l'adresse de la machine source, et l'adresse de la machine destination.

10. Procédé selon la revendication 9 dans lequel chaque premier module de contrôle (26, 56, 60, 68, 104, 108, 200, 202, 203) interceptant un flux insère des données de routage si un flux de sens opposé n'a pas encore été intercepté ou si un flux de sens opposé a été intercepté sans données de routage.

11. Procédé selon l'une des revendications 1 à 9 **caractérisé en ce que** les flux de données sont des simplex échangées selon le protocole TCP ou selon le protocole IPv6 et **en ce que** les données de routage sont insérées dans un champ optionnel de l'entête des premiers paquets desdits flux.

12. Procédé selon la revendication 1 dans lequel lesdits domaines de contrôle (2, 4) sont des réseaux virtuels privés.

13. Procédé selon la revendication 1 dans lequel lesdits modules de contrôle sont des logiciels s'exécutant sur des plates-formes matérielles.

14. Dispositif de gestion des échanges de flux de données dans un réseau de télécommunication autonomique (1) comportant une pluralité de domaines de contrôle (2, 4) comportant chacun un module central (130) de gestion de communication destiné à définir des règles générales de transfert des flux de données entre une pluralité de machines sources (20) d'informations et une pluralité de machines destinations (22) d'informations, et au moins un module de contrôle (26, 56, 60, 68, 104, 108, 200, 202, 203, 300, 301) destiné à imposer lesdites règles de transfert dans chacun desdits domaines,
Dispositif **caractérisé en ce que** chaque module de contrôle (26, 56, 60, 68, 104, 108, 200, 202, 203, 300, 301) comporte:
- des moyens pour intercepter chaque flux échangé entre une machine source et une machine destination dans un domaine de contrôle (2, 4) particulier ;
- des moyens pour extraire de chaque flux intercepté l'adresse de la machine source et l'adresse de la machine destination ;
- des moyens pour insérer dans chaque flux intercepté des données de routage comportant au moins un identifiant du domaine de contrôle (2, 4) particulier dans ledit réseau et un identifiant du premier module de contrôle (26, 56, 60, 68, 104, 108, 200, 202, 203, 300, 301) ayant intercepté le flux dans ce domaine;
- des moyens pour retransmettre chaque flux intercepté ;
- des moyens pour extraire de chaque flux retransmis avec données de routage un identifiant du domaine de contrôle (2, 4) particulier, un identifiant du premier module de contrôle (26, 56, 60, 68, 104, 108, 200, 202, 203, 300, 301) ayant intercepté ledit flux dans ce domaine, une adresse de la machine source, une adresse de la machine destination, et les données de routage insérées dans le flux intercepté
- des moyens pour déduire de l'identifiant du premier module de contrôle (26, 56, 68, 104, 200) extrait des données de routage une adresse permettant l'établissement d'une connexion directe avec ce premier module de contrôle (26, 56, 60, 68, 104, 108, 200, 202, 203, 300, 301),
- des moyens pour établir une connexion directe avec ce premier module et de contrôle,
- des moyens pour partager avec le premier module de contrôle (26, 56, 60, 68, 104, 108, 200, 202, 203, 300, 301) des paramètres dynamiques permettant de contrôler le transfert de chaque flux de l'entrée à la sortie dudit domaine particulier
- des moyens pour échanger avec ce premier module de contrôle (26, 56, 60, 68, 104, 108, 200, 202, 203, 300, 301) les données de supervision du transfert du flux via cette connexion,
- des moyens pour utiliser les données de supervision et les règles générales de transfert de flux préétablies par le module central (130) pour ajuster dynamiquement les paramètres de transfert de chaque flux intercepté, de manière à établir des connexions directes avec d'autres modules de contrôle dudit domaine particulier pour contrôler les paramètres de transfert de l'entrée à la sortie dudit domaine particulier.

15. Dispositif selon la revendication 14 dans lequel les différents modules de contrôle dudit domaine particulier interceptant le flux retransmis par un premier module de contrôle (26, 56, 60, 68, 104, 108, 200, 202, 203, 300, 301) ayant intercepté le flux dans ce domaine sont configurés pour échanger directement avec ce premier module de contrôle (26, 56, 60, 68, 104, 108, 200, 202, 203, 300, 301) les paramètres définissant des règles de transfert de flux dans ce domaine particulier lorsqu'ils sont déjà inscrits dans ledit domaine particulier.

16. Dispositif selon la revendication 14 dans lequel les différents modules de contrôle dudit domaine particulier interceptant le flux retransmis par un premier module de contrôle (26, 56, 60, 68, 104, 108, 200, 202, 203, 300, 301) ayant intercepté le flux dans ce domaine sont configurés pour transmettre au module central (130) de gestion de ce domaine des données d'identification lorsqu'ils ne sont pas encore inscrits dans ce domaine particulier.

17. Dispositif selon la revendication 11 dans lequel les différents modules de contrôle n'appartenant pas au domaine de contrôle (2, 4) particulier et interceptant le flux retransmis par un premier module de contrôle (26, 56, 60, 68, 104, 108, 200, 202, 203, 300, 301) ayant intercepté le flux dans ce domaine sont configurés pour déduire l'adresse du module central (130) de ce domaine à partir des données routage insérés par le premier module de contrôle (26, 56, 60, 68, 104, 108, 200, 202, 203, 300, 301) dans le flux intercepté, se connecter audit module central (130), récupérer des paramètres de localisation dans le réseau, transmettre audit module central (130) les données d'identification pour une inscription dans ce domaine, et récupérer les paramètres définissant les règles de transfert de flux dans ce domaine.

## Patentansprüche

1. Verfahren zur Verwaltung des Austausches von Datenströmen in einem automatischen Telekommunikationsnetz (1), umfassend eine Vielzahl von Kontrollbereichen (2, 4), jeweils umfassend ein zentrales Kommunikationsverwaltungsmodul (170), das dazu bestimmt ist, allgemeine Übertragungsregeln für die Datenströme zwischen einer Vielzahl von Ausgangsmaschinen (20) und einer Vielzahl von Bestimmungsmaschinen (22) zu definieren, und mindestens ein Kontrollmodul (26, 56, 60, 68, 104, 108, 200, 202, 203, 300, 301), das dazu bestimmt ist, die Übertragungsregeln in jedem der Bereiche vorzugeben, wobei das Verfahren **dadurch gekennzeichnet ist, dass** es die folgenden Schritte umfasst:
- Abfangen jedes zwischen einer Ausgangsmaschine (20) und einer Bestimmungsmaschine (22) in einem besonderen Kontrollbereich (2, 4) ausgetauschten Stroms durch ein erstes Kontrollmodul (26, 56, 104, 200, 300);
- aus jedem abgefangenen Strom Entnahme der Adresse der Ausgangsmaschine (20) und der Adresse der Bestimmungsmaschine (22);
- in jeden abgefangenen Strom Einsetzen der Routing-Daten, umfassend mindestens einen Identifikator des besonderen Kontrollbereichs (2, 4) in dem Netz und einen Identifikator des ersten Kontrollmoduls (26, 56, 60, 68, 104, 108, 200, 202, 203, 300, 301) in diesem Bereich;
- Übertragung jedes abgefangenen Stroms,
und wenn ein mit den Routing-Daten erneut übertragener Strom von einem zweiten Kontrollmodul (26, 60, 108, 202, 203) abgefangen wird, entnimmt dieses letztgenannte aus dem Strom den Identifikator des besonderen Kontrollbereichs, den Identifikator des ersten Kontrollmoduls (26, 56, 60, 68, 104, 108, 200, 202, 203, 300, 301) in diesem Bereich, eine Adresse der Ausgangsmaschine (20), eine Adresse der Bestimmungsmaschine (22) und die Routing-Daten, die in den abgefangenen Strom eingesetzt wurden,
- leitet aus dem Identifikator des ersten Kontrollmoduls (26, 56, 68, 104, 200), der aus den Routing-Daten entnommen wurde, eine Adresse ab, die die Herstellung einer direkten Verbindung mit diesem ersten Kontrollmodul (26, 56, 60, 68, 104, 108, 200, 202, 203, 300, 301) ermöglicht,
- stellt eine direkte Verbindung mit diesem ersten Kontrollmodul her,
- teilt mit dem ersten Kontrollmodul (26, 56, 60, 68, 104, 108, 200, 202, 203, 300, 301) dynamische Parameter, die es ermöglichen, die Weiterleitung jedes Stroms vom Eingang zum Ausgang des besonderen Bereichs zu kontrollieren,
- tauscht mit diesem ersten Kontrollmodul (26, 56, 60, 68, 104, 108, 200, 202, 203, 300, 301) die Überwachungsdaten der Weiterleitung des Stroms zu dieser Verbindung aus,
- verwendet die Überwachungsdaten und die allgemeinen Regeln für die Weiterleitung eines Stroms, die vom Zentralmodul (130) erstellt wurden, um die Weiterleitungsparameter jedes abgefangenen Stroms dynamisch anzupassen.

2. Verfahren nach Anspruch 1, bei dem, wenn das zweite Kontrollmodul (26, 56, 60, 68, 104, 10, 200, 202, 300, 301) bereits in diesen besonderen Bereich eingeschrieben ist, es direkt mit dem ersten Kontrollmodul (26, 56, 60, 68, 104, 108, 200, 202, 203, 300, 301) die dynamischen Parameter teilt, die es ermöglichen, die Weiterleitung jedes der abgefangenen Ströme zu kontrollieren.

3. Verfahren nach Anspruch 1, bei dem, wenn das zweite Kontrollmodul (26, 56, 60, 68, 104, 10, 200, 202, 300, 301) noch nicht in diesen besonderen Bereich eingeschrieben ist, es an das zentrale Verwaltungsmodul (130) dieses Bereichs Identifikationsdaten für seine Einschreibung in diesen Bereich überträgt und die Parameter, die die Regeln für die Weiterleitung eines Stroms in diesem Bereich definieren, übernimmt.

4. Verfahren nach Anspruch 1, bei dem, wenn das zweite Kontrollmodul (26, 56, 60, 68, 104, 10, 200, 202, 300, 301) nicht dem besonderen Kontrollbereich (2, 4) angehört, es die Adresse des Zentralmoduls (130) dieses Bereichs aus den Routing-Daten ableitet, die vom ersten Kontrollmodul (26, 56, 60, 68, 104, 10, 200, 202, 300, 301) in den abgefangenen Strom eingesetzt wurden, sic an das Zentralmodul (130) anschließt, Lokalisierungsparameter in dem Netz übernimmt, an das Zentralmodul (130) die Identifikationsdaten zu seiner Einschreibung in diesen Bereich überträgt und die Parameter, die die Regeln für die Weiterleitung eines Stroms in diesem Bereich definieren, übernimmt.

5. Verfahren nach Anspruch 3 oder 4, bei dem beim Empfang der Identifikationsdaten das Zentralmodul (130) an das zweite Kontrollmodul (26, 56, 60, 68, 104, 10, 200, 202, 300, 301) einen einzigen Identifikator in der Kontrolle (2, 4) in geschützter Form liefert.

6. Verfahren nach Anspruch 1, ferner umfassend die folgenden Schritte:
- Messen der Übertragungsmerkmale der abgefangenen Ströme zwischen der Ausgangsmaschine und der Bestimmungsmaschine,
- Ändern der Ablaufplanung der Ströme, um die kritischsten Ströme zu begünstigen,
- Löschen der redundanten Informationen, die in den Strömen während des Durchquerens des Bereichs enthalten sind,
- Ändern der Informationen des Kunden-Server-Protokolls, die von den Strömen transportiert werden,
- Messen der Übertragungsmerkmale der Konsumenten-Produzenten-Ströme.

7. Verfahren nach Anspruch 6, bei dem die Übertragungsregeln zwischen Ausgangsmaschinen (20) und Bestimmungsmaschinen (22) in einer einzigen Übertragungsrichtung der Ströme von den Kontrollmodulen am Eingang und Ausgang des Bereichs vorgegeben werden.

8. Verfahren nach Anspruch 6, bei dem die Übertragungsregeln zwischen Ausgangsmaschinen (20) und Bestimmungsmaschinen (22) in beiden Übertragungsrichtungen der Ströme durch Kontrollmodule vorgeben werden, die am Eingang bzw. am Ausgang des Bereichs angeordnet sind.

9. Verfahren nach einem der Ansprüche 7 oder 8, bei dem jedes Kontrollmodul (26, 56, 60, 68, 104, 108, 200, 202, 203, 300, 301), das von einem erneut mit Routing-Daten übertragenen Strom durchquert wird, den Identifikator des besonderen Kontrollbereichs (2, 4), den Identifikator des ersten Kontrollmoduls (26, 56, 60, 68, 104, 10, 200, 202, 300, 301) in diesem Bereich, die Adresse der Ausgangsmaschine und die Adresse der Bestimmungsmaschine speichert.

10. Verfahren nach Anspruch 9, bei dem jedes erste Kontrollmodul (26, 56, 60, 68, 104, 108, 200, 202, 203), das einen Strom abfängt, Routing-Daten einsetzt, wenn ein Strom von entgegengesetzter Richtung noch nicht abgefangen wurde, oder wenn ein Strom von entgegengesetzter Richtung ohne Routing-Daten abgefangen wurde.

11. Verfahren nach einem der Ansprüche 1 bis 9, **dadurch gekennzeichnet, dass** die Datenströme nach dem Protokoll TCP oder nach dem Protokoll IPv6 ausgetauschte Simplexe sind, und dass die Routing-Daten in ein optionales Feld der Kopfzeile der ersten Pakete dieser Ströme eingesetzt sind.

12. Verfahren nach Anspruch 1, bei dem die Kontrollbereiche (2, 4) virtuelle private Netze sind.

13. Verfahren nach Anspruch 1, bei dem die Kontrollmodule Software ist, die auf materiellen Plattformen ausgeführt wird.

14. Vorrichtung zur Verwaltung des Austausches von Datenströmen in einem automatischen Telekommunikationsnetz (1), umfassend eine Vielzahl von Kontrollbereichen (2, 4), jeweils umfassend ein zentrales Kommunikationsverwaltungsmodul (130), das dazu bestimmt ist, allgemeine Übertragungsregeln für die Datenströme zwischen einer Vielzahl von Ausgangsmaschinen (20) und einer Vielzahl von Bestimmungsmaschinen (22) zu definieren, und mindestens ein Kontrollmodul (26, 56, 60, 68, 104, 108, 200, 202, 203, 300, 301), das dazu bestimmt ist, die Übertragungsregeln in jedem der Bereiche vorzugeben, wobei die Vorrichtung **dadurch gekennzeichnet ist, dass** jedes Kontrollmodul (26, 56, 60, 68, 104, 108, 200, 202, 203, 300, 301) umfasst:
- Mittel zum Abfangen jedes zwischen einer Ausgangsmaschine und einer Bestimmungsmaschine in einem besonderen Kontrollbereich (2, 4) ausgetauschten Stroms;
- Mittel, um aus jedem abgefangenen Strom die Adresse der Ausgangsmaschine und der Adresse der Bestimmungsmaschine zu entnehmen;
- Mittel, um in jeden abgefangenen Strom Routing-Daten einzusetzen, umfassend mindestens einen Identifikator des besonderen Kontrollbereichs (2, 4) in dem Netz und einen Identifikator des ersten Kontrollmoduls (26, 56, 60, 68, 104, 108, 200, 202, 203, 300, 301), das den Strom in diesem Bereich abgefangen hat;
- Mittel zur Rückübertragung jedes abgefangenen Stroms;
- Mittel, um aus jedem mit Routing-Daten erneut übertragenen Strom einen Identifikator des besonderen Kontrollbereichs (2, 4), einen Identifikator des ersten Kontrollmoduls (26, 56, 60, 68, 104, 108, 200, 202, 203, 300, 301), das den Strom in diesem Bereich abgefangen hat, eine Adresse der Ausgangsmaschine, eine Adresse der Bestimmungsmaschine und die Routing-Daten, die in den abgefangenen Strom eingesetzt wurden, zu entnehmen;
- Mittel, um aus dem Identifikator des ersten Kontrollmoduls (26, 56, 68, 104, 200), der aus den Routing-Daten entnommen wurde, eine Adresse abzuleiten, die die Herstellung einer direkten Verbindung mit diesem ersten Kontrollmodul (26, 56, 60, 68, 104, 108, 200, 202, 203, 300, 301) ermöglicht,
- Mittel, um eine direkte Verbindung mit diesem ersten Kontrollmodul herzustellen,
- Mittel, um mit dem ersten Kontrollmodul (26, 56, 60, 68, 104, 108, 200, 202, 203, 300, 301) dynamische Parameter zu teilen, die es ermöglichen, die Weiterleitung jedes Stroms vom Eingang zum Ausgang des besonderen Bereichs zu kontrollieren,
- Mittel, um mit diesem ersten Kontrollmodul (26, 56, 60, 68, 104, 108, 200, 202, 203, 300, 301) die Überwachungsdaten der Weiterleitung des Stroms zu dieser Verbindung auszutauschen,
- Mittel, um die Überwachungsdaten und die allgemeinen Regeln für die Weiterleitung eines Stroms, die vom Zentralmodul (130) vorher erstellt wurden, zu verwenden, um die Weiterleitungsparameter jedes abgefangenen Stroms dynamisch anzupassen, um direkte Verbindungen mit anderen Kontrollmodulen des besonderen Bereichs zur Kontrolle der Weiterleitungsparameter vom Eingang zum Ausgang des besonderen Bereichs herzustellen.

15. Vorrichtung nach Anspruch 14, bei der die verschiedenen Kontrollmodule des besonderen Bereichs, die den Strom abfangen, der von einem ersten Kontrollmodul (26, 56, 60, 68, 104, 108, 200, 202, 203, 300, 301), das den Strom in diesem Bereich abgefangen hat, erneut übertragen wurde, derart ausgeführt sind, dass sie direkt mit diesem ersten Kontrollmodul (26, 56, 60, 68, 104, 108, 200, 202, 203, 300, 301) die Parameter austauschen, die Regeln für die Weiterleitung eines Stroms in diesem besonderen Bereich definieren, wenn sie bereits in den besonderen Bereich eingeschrieben sind.

16. Vorrichtung nach Anspruch 14, bei der die verschiedenen Kontrollmodule des besonderen Bereichs, die den Strom abfangen, der von einem ersten Kontrollmodul (26, 56, 60, 68, 104, 108, 200, 202, 203, 300, 301), das den Strom in diesem Bereich abgefangen hat, erneut übertragen wurde, derart ausgeführt sind, dass an das zentrale Verwaltungsmodul (130) dieses Bereichs Identifikationsdaten liefern, wenn sich noch nicht in den besonderen Bereich eingeschrieben sind.

17. Vorrichtung nach Anspruch 11, bei der die verschiedenen Kontrollmodule, die nicht dem besonderen Kontrollbereich (2, 4) angehören und den Strom abfangen, der von einem ersten Kontrollmodul (26, 56, 60, 68, 104, 108, 200, 202, 203, 300, 301), das den Strom in diesem Bereich abgefangen hat, erneut übertragen wurde, derart ausgeführt sind, dass sie die Adresse des Zentralmoduls (130) dieses Bereichs aus Routing-Daten ableiten, die von dem ersten Kontrollmodul (26, 56, 60, 68, 104, 108, 200, 202, 203, 300, 301) in den abgefangenen Strom eingesetzt wurden, sich an das Zentralmodul (130) anschließen, Lokalisierungsparameter in dem Netz übernehmen, an das Zentralmodul (130) die Identifikationsdaten für ein Einschreiben in dieses Modul übertragen und die Parameter übernehmen, die die Regeln für die Weiterleitung eines Stroms in diesem Bereich definieren.

## Claims

1. A method for managing data flow exchanges in a autonomic telecommunications network (1) including a plurality of control domains (2, 4) each including a central communication management module (170) intended for defining general rules for transferring data flows between a plurality of source machines (20) and a plurality of destination machines (22), and at least one control module (26, 56, 60, 68, 104, 108, 200, 202, 203, 300, 301) intended for imposing said transfer rules in each of said domains, a method **characterized in that** it includes the following steps:
- intercepting with a first control module (26, 56, 104, 200, 300) each flow exchanged between a source machine (20) and a destination machine (22) in a particular control domain (2, 4);
- extracting from each intercepted flow the address of the source machine (20) and the address of the destination machine (22);
- inserting into each intercepted flow, routing data including at least one identifier of the particular control domain (2, 4) in said network and an identifier of the first control module (26, 56, 60, 68, 104, 108, 200, 202, 203, 300, 301) in this domain;
- transmitting each intercepted flow;
and, when a flow retransmitted with the routing data is intercepted by a second control module (26, 60, 108, 202, 203), the latter extracts from said flow the identifier of the particular control domain (2, 4), the identifier of the first control module (26, 56, 60, 68, 104, 108, 200, 202, 203, 300, 301) in this domain, an address of the source machine (20), an address of the destination machine (22), and the routing data inserted in the intercepted flow,
- infers from the identifier of the first control module (26, 56, 68, 104, 200) extracted from the routing data, an address allowing establishment of a direct connection with this first control module (26, 56, 60, 68, 104, 108, 200, 202, 203, 300, 301),
- establishes a direct connection with the first module and control,
- shares with the first control module (26, 56, 60, 68, 104, 108, 200, 202, 203, 300, 301) dynamic parameters allowing control of the transfer of each flow from the input to the output of said particular domain,
- exchanges with this first control module (26, 56, 60, 68, 104, 108, 200, 202, 203, 300, 301) the data for supervising the transfer of the flow via this connection,
- uses the supervision data and the general flow transfer rules pre-established by the central module (130) for dynamically adjusting the transfer parameters of each intercepted flow.

2. The method according to claim 1, wherein, when the second control module (26, 56, 60, 68, 104, 108, 200, 202, 203, 300, 301) is already registered in this particular domain, it directly shares with said control module (26, 56, 60, 68, 104, 108, 200, 202, 203, 300, 301) the dynamic parameters allowing control of the transfer of each of the intercepted flows.

3. The method according to claim 1, wherein, when the second control module (26, 56, 60, 68, 104, 108, 200, 202, 203, 300, 301) is not yet registered in this particular domain, it transmits to the central module (130) for managing this domain, identification data for its registration in this domain and recovers the parameters defining the flow transfer rules in this domain.

4. The method according to claim 1, wherein, when the second control module (26, 56, 60, 68, 104, 108, 200, 202, 203, 300, 301) does not belong to the particular control domain (2, 4), it infers the address of the central module (130) of this domain from routing data inserted by the first control module (26, 56, 60, 68, 104, 108, 200, 202, 203, 300, 301) into the intercepted flow, connects to said central module (130), recovers localization parameters in the network, transmits to said central module (130) the identification data for its registration in this domain, and recovers the parameters defining the flow transfer rules in this domain.

5. The method according to claim 3 or 4, wherein, upon receiving said identification data, the central module (130) issues to said second control module (26, 56, 60, 68, 104, 108, 200, 202, 203, 300, 301) a unique identifier in the control domain (2, 4) in a protected form.

6. The method according to claim 1, further including the following steps:
- measuring the transfer characteristics of the intercepted flows between the source machine and the destination machine,
- modifying the regulatory organization of said flows for favoring the most critical flows,
- suppressing the redundant information contained in said flows during the crossing of the domain,
- modifying the client-server protocol information conveyed by said flows,
- measuring the transfer characteristics of the consumer-producer flows.

7. The method according to claim 6, wherein the rules for transfer between source machines (20) and destination machines (22) are imposed on a single transfer direction of the flows from input and output control modules of the domain.

8. The method according to claim 6, wherein the rules for transfer between source machines (20) and destination machines (22) are imposed on the two transfer directions of the flows by control modules laid out at the input and at the output of the domain respectively.

9. The method according to one of claims 7 or 8, wherein each control module (26, 56, 60, 68, 104, 108, 200, 202, 203, 300, 301) crossed by a flow retransmitted with routine data, stores in memory the identifier of the particular control domain (2, 4), the identifier of the first control module (26, 56, 60, 68, 104, 108, 200, 202, 203, 300, 301) in this domain, the address of the source machine, and the address of the destination machine.

10. The method according to claim 9, wherein each first control module (26, 56, 60, 68, 104, 108, 200, 202, 203) intercepting a flow, inserts routing data if a flow in the opposite direction has not yet been intercepted or if a flow in the opposite direction has been intercepted without any routine data.

11. The method according to one of claims 1 to 9, **characterized in that** the data flows are exchanged simplexes according to the TCP protocol or according to the IPv6 protocol and **in that** the routing data are inserted in an optional field of the header of the first packets of said flows.

12. The method according to claim 1, wherein said control domains (2, 4) are private virtual networks.

13. The method according to claim 1, wherein said control modules are software packages running on hardware platforms.

14. A device for managing data flow exchanges in a autonomic telecommunications network (1) including a plurality of control domains (2, 4) each including a central communication management module (130) intended for defining the general rules for transferring data flows between a plurality of information source machines (20) and a plurality of information destination machines (22), and at least one control module (26, 56, 60, 68, 104, 108, 200, 202, 203, 300, 301) intended for imposing said transfer rules in each of said domains,
a device **characterized in that** each control module (26, 56, 60, 68, 104, 108, 200, 202, 203, 300, 301) includes:
- means for intercepting each flow exchanged between a source machine and a destination machine in a particular control domain (2, 4);
- means for extracting from each intercepted flow, the address of the source machine and the address of the destination machine;
- means for inserting in each intercepted flow, routing data including at least one identifier of the particular control domain (2, 4) in said network and an identifier of the first control module (26, 56, 60, 68, 104, 108, 200, 202, 203, 300, 301) having intercepted the flow in this domain;
- means for retransmitting each intercepted flow;
- means for extracting from each retransmitted flow with routine data, an identifier of the particular control domain (2, 4), an identifier of the first control module (26, 56, 60, 68, 104, 108, 200, 202, 203, 300, 301) having intercepted said flow in this domain, an address of the source machine, an address of the destination machine, and the routing data inserted into the intercepted flow,
- means for inferring from the identifier of the first control module (26, 56, 68, 104, 200) extracted from the routine data, an address allowing establishment of a direct connection with this first control module (26, 56, 60, 68, 104, 108, 200, 202, 203, 300, 301),
- means for establishing a direct connection with this first module and control,
- means for sharing with the first control module (26, 56, 60, 68, 104, 108, 200, 202, 203, 300, 301) dynamic parameters allowing control of the transfer of each flow from the input to the output of said particular domain,
- means for exchanging with this first control module (26, 56, 60, 68, 104, 108, 200, 202, 203, 300, 301) the data for supervising the transfer of the flow via this connection,
- means for using the supervision data and the general flow transfer rules pre-established by the central module (130) for dynamically adjusting the transfer parameters of each intercepted flow, so as to establish direct connections with other control modules of said particular domain for controlling the transfer parameters from the input to the output of said particular domain.

15. The device according to claim 14, wherein the different control modules of said particular domain intercepting the flow retransmitted by a first control module (26, 56, 60, 68, 104, 108, 200, 202, 203, 300, 301) having intercepted the flow in this domain, are configured so as to directly exchange with this first control module (26, 56, 60, 68, 104, 108, 200, 202, 203, 300, 301) the parameters defining flow transfer rules in this particular domain when they are already registered in said particular domain.

16. The device according to claim 14, wherein the different control modules of said particular domain intercepting the flow retransmitted by a first control module (26, 56, 60, 68, 104, 108, 200, 202, 203, 300, 301) having intercepted the flow in this domain are configured for transmitting to the central module (130) for managing of this domain, identification data when they are not yet registered in this particular domain.

17. The device according to claim 11, wherein the different control modules not belonging to the particular control domain (2, 4) and intercepting the flow retransmitted by a first control module (26, 56, 60, 68, 104, 108, 200, 202, 203, 300, 301) having intercepted the flow in this domain are configured for inferring the address of the central module (130) of this domain from routing data inserted by the first control module (26, 56, 60, 68, 104, 108, 200, 202, 203, 300, 301) into the intercepted flow, connecting to said central module (130), recovering localization parameters in the network, transmitting to said central module (130) identification data for registration in this domain, and recovering the parameters defining the flow transfer rules in this domain.
